Europäisches Patentamt

European Patent Office

Office européen des brevets

(19)

(11) Veröffentlichungsnummer: **0 330 126**
**A2**

(12) # EUROPÄISCHE PATENTANMELDUNG

(21) Anmeldenummer: 89102925.8

(22) Anmeldetag: 20.02.89

(51) Int. Cl.⁴: **F02F 11/00**

(30) Priorität: 25.02.88 DE 3805940

(43) Veröffentlichungstag der Anmeldung:
**30.08.89 Patentblatt 89/35**

(84) Benannte Vertragsstaaten:
**AT BE CH DE ES FR GB GR IT LI LU NL SE**

(71) Anmelder: **KSA Dichtsysteme GmbH & Co. KG**
**Steinbeisstrasse 46**
**D-7143 Vaihingen an der Enz(DE)**

(72) Erfinder: **Abele, Berthold W.**
**Am Schalkstein 21**
**D-7121 Walheim(DE)**

(74) Vertreter: **Jackisch-Kohl, Anna-Katharina et al**
**Patentanwälte Jackisch-Kohl & Kohl**
**Stuttgarter Strasse 115**
**D-7000 Stuttgart 30(DE)**

(54) **Zylinderkopfdichtung.**

(57) Die Zylinderkopfdichtung hat einen Träger(1) mit Ausnehmungen (2) für Verbrennungsräume eines Verbrennungsmotors. Am Rand der Ausnehmungen (2) für die Verbrennungsräume sind hitzebeständige Dichtelemente (4) vorgesehen, die durch profilierte Abschnitte (31 bis 33) des Trägers (1) selbst gebildet sind. Diese Dichtelemente (31 bis 33) erfordern keinen zusätzlichen Montagevorgang. Da der Träger (1) und die Dichtelemente (31-33) aus dem gleichen Material bestehen, ist eine optimale Abdichtung gewährleistet.

FIG.4

EP 0 330 126 A2

## Zylinderkopfdichtung

Die Erfindung betrifft eine Zylinderkopfdichtung nach dem Oberbegriff des Anspruches 1.

Bei einer solchen bekannten Zylinderkopfdichtung besteht der Träger aus Asbest oder einem entsprechenden Kunststoff. Am Rand der Ausnehmungen für die Verbrennungsräume des Verbrennungsmotors ist als Dichtelement eine umgebördelte Metallklammer vorgesehen. Diese Zylinderkopfdichtung ist wegen der Umbördelung der Metallklammern sowie deren spezielle Formgebung aufwendig und teuer. Der Träger aus Asbest oder aus Kunststoff zeigt darüber hinaus in der Einbaulage ein Setzverhalten. Das Anzugsmoment der Schrauben kann dadurch nur bedingt ausgenutzt werden. Erfahrungsgemäß müssen nach Ablauf einer gewissen Zeit die Schrauben am Zylinderkopf nachgezogen werden, bedingt durch das Setzverhalten der verwendeten Materialien. Darüber hinaus kann diese Zylinderkopfdichtung nach ihrem Ausbau nicht mehr wiederverwendet werden, weil das Trägermaterial bei entsprechend längerem Einsatz am Motorgehäuse und/oder am Zylinderkopf anbackt, so daß die Zylinderkopfdichtung nicht ohne Beschädigung entfernt werden kann.

Der Erfindung liegt die Aufgabe zugrunde, die gattungsgemäße Zylinderkopfdichtung so auszubilden, daß sie bei einfacher und preisgünstiger Herstellung die Einstellung eines genauen, definierten Anziehmomentes beim Verbinden des Zylinderkopfes mit dem Motorgehäuse gewährleistet und nach ihrem Ausbau wieder verwendet werden kann.

Diese Aufgabe wird bei der gattungsgemäßen Zylinderkopfdichtung erfindungsgemäß mit den kennzeichnenden Merkmalen des Anspruches 1 gelöst.

Bei der erfindungsgemäßen Zylinderkopfdichtung besteht der Träger aus hitzebeständigem Material, vorzugsweise aus Metall, wodurch eine wirtschaftliche Herstellung möglich ist. Die verbrennungsraumseitigen Dichtelemente müssen nicht in einem aufwendigen Bördelungsvorgang am Träger angebracht werden; vielmehr wird der Träger selbst zur Bildung der verbrennungsraumseitigen Dichtelemente profiliert. Im Träger ist eine gleichmäßige kontinuierliche Wärmeverteilung möglich, so daß im Einsatz der erfindungsgemäßen Zylinderkopfdichtung keine Spannungen auftreten. Dadurch ist eine optimale Abdichtung sichergestellt. Der Träger zeigt in der Einbaulage kein Setzverhalten, so daß ein genaues Anziehmoment beim Befestigen des Zylinderkopfes am Motorgehäuse eingestellt werden kann. Die Dichtwirkung der Dichtelemente läßt sich dadurch sehr einfach optimal einstellen. Die Zylinderkopfdichtung läßt sich einfach demontieren, da sie infolge des Trägers nicht am Zylinderkopf und/oder am Motorgehäuse anbackt. Sie kann daher ohne Schwierigkeiten abgenommen und erneut verwendet werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen

Fig. 1 eine Draufsicht auf eine erfindungsgemäße Zylinderkopfdichtung,

Fig. 2 einen Schnitt längs der Linie II-II in Fig. 1,

Fig. 3 die Einzelheit III in Fig. 2 in vergrößerter Darstellung,

Fig. 4 die Einzelheit IV in Fig. 2 in vergrößerter Darstellung.

Die Zylinderkopfdichtung hat einen Träger 1, der aus metallischem Material besteht, wie Edelstahl, verkupferter oder verzinkter Stahl, Aluminium und dgl. Die Zylinderkopfdichtung hat im Ausführungsbeispiel vier nebeneinander liegende gleich große Ausnehmungen 2, die durch Stege 3 voneinander getrennt sind. Die Ausnehmungen 2 sind kreisförmig ausgebildet und jeweils von einem Dichtelement 4 umgeben. Die Ausnehmungen 2 sind für die Zylinderräume einer Vierzylindermaschine vorgesehen. Im Träger 1 sind außerdem weitere Öffnungen 5 und 6 für Kühlkanäle angeordnet. Sie werden jeweils mit geringem Abstand von weiteren Dichtelementen 7 umgeben.

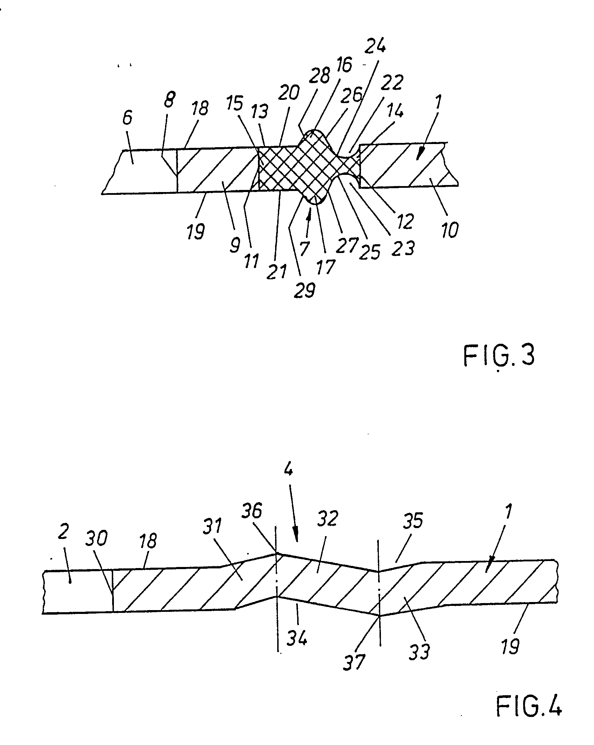

Anhand der Fig. 3 soll nunmehr das Dichtelement 7 näher erläutert werden, das bei den Öffnungen 5 und 6 jeweils die gleiche Ausbildung hat. Das Dichtelement 7 verläuft parallel zum Rand 8 der Öffnung 6 und verbindet einen die Öffnungen enthaltenden Trägerabschnitt 9 mit dem übrigen Teil 10 des Trägers 1. Der Träger 1 besteht somit aus voneinander getrennten Teilen, nämlich dem Trägerabschnitt 9 und dem Trägerteil 10, die durch das umlaufende Dichtelement 7 miteinander verbunden sind. Der Trägerabschnitt 9 wird durch einen Randabschnitt der Öffnung 6 gebildet und ist ringförmig ausgebildet.

Die beiden Trägerteile 9 und 10 können mechanisch mit dem Dichtelement 7 verbunden werden. Vorzugsweise wird das Dichtelement 7 jedoch chemisch mit dem Trägerabschnitt 9 und dem Trägerteil 10 fest verbunden. Die einander zugewandten, ringförmig verlaufenden Seitenflächen 11 und 12 des Trägerabschnitt 9 und des Trägerteiles 10 begrenzen einen Ringspalt 13, der durch das Dichtelement 7 im wesentlichen ausgefüllt wird. Die Seitenflächen 11, 12 bilden außerdem Bindeflächen, an denen das Dichtelement 7 befestigt wird. Die Seitenflächen 11, 12 werden zur Befestigung des Dichtelementes 7 zunächst vorzugsweise aufgerauht. Anschließend wird ein chemischer Haftvermittler als Bindemittel aufgebracht und das Dichtelement 7 eingesetzt und so mit den Seitenflächen 11 und 12 verbunden. Anschließend wird die Zylinderkopfdichtung einer Wärmebehandlung, vorzugsweise einer Vulkanisation, unterworfen, so daß eine absolut feste Verbindung zwischen dem Dichtelement 7 und den Trägerteilen 9, 10 erreicht wird. Diese Verbindung ist so fest, daß die Zylinderkopfdichtung den an sie gestellten Anforderungen einwandfrei gerecht wird.

Im dargestellten Ausführungsbeispiel hat das Dichtelement 7 im Anschlußbereich zum Trägerabschnitt 9 gleiche Dicke wie dieser, so daß eine feste Verbindung zwischen diesem Trägerabschnitt und dem Dichtelement 7 gewährleistet ist. Im Anschlußbereich zum Trägerteil 10 ist das Dichtelement 7 jedoch wesentlich dünner als der Trägerteil 10. Dieser dünnere Rand 14 des Dichtelementes 7 ist nur etwa halb so dick wie der gegenüberliegende Rand 15 des Dichtelementes bzw. wie der Trägerteil 9.

Das Dichtelement 7 hat zwei ringförmige Dichtlippen 16 und 17, die über die Ober- und Unterseite 18 und 19 des Trägers 1 ragen. Die beiden Dichtlippen 16, 17 liegen auf gleicher Höhe und gehen jeweils stetig gekrümmt in die Ober- und Unterseite 20 und 21 des dickeren Randes 15 des Dichtelementes über. Die Oberseite 18 und die Unterseite 19 des Trägerabschnittes 9 liegt jeweils in einer gemeinsamen Ebene mit der Oberseite 20 und der Unterseite 21 des Randes 15 des Dichtelementes 7. Zwischen den beiden Dichtlippen 16, 17 und dem Trägerteil 10 ist das Dichtelement 7 jeweils mit einer Vertiefung 22 und 23 versehen, deren Boden 24 und 25 im Querschnitt teilkreisförmig gekrümmt ist und in eine konisch verlaufende Seitenwand 26 bzw. 27 der Dichtlippe 16 bzw. 17 übergeht. Die gegenüberliegende, ebenfalls konisch verlaufende Seitenwand 28 und 29 der Dichtlippen 16 und 17 geht stetig gekrümmt in die Seitenwände 26, 27 sowie in die Ober- und Unterseite 20 und 21 des Dichtelementes 7 über. Der Boden 24, 25 der Vertiefungen 22, 23 geht außerdem in die Seitenfläche 12 des Trägerteiles 10 mit Abstand von der Ober- und Unterseite 18, 19 des Trägers 1 über. Die Seitenwände 26 und 27 der Dichtlippen 16, 17 sind länger als die Seitenwände 28 und 29, so daß der Boden 24, 25 der Vertiefungen 22, 23 innerhalb der Querschnittsdicke des Trägers 1 liegt.

In der Einbaulage der Zylinderkopfdichtung werden die Dichtlippen 16, 17 elastisch zusammengedrückt. Das Material der Dichtlippen 16, 17 wird hierbei in die Vertiefungen 22, 23 verdrängt, so daß die Zylinderkopfdichtung in der Einbaulage keine über die Ober- und Unterseite 18, 19 vorstehenden Teile hat und das Dichtelement 7 nicht unzulässig stark verformt wird. Die Dichtelemente 7 können aus Elastomeren, wie Gummi, aus thermoplastischen Elastomeren, aus Kunststoffen, aus Weichmetallen und dgl. bestehen. Das Material der Dichtelemente 7 richtet sich nach dem gewünschten Einsatzgebiet und der erforderlichen Dichtfunktion. Da die beiden Trägerteile 9 und 10 ausschließlich durch das Dichtelement 7 miteinander verbunden sind, also zwischen diesen Teilen kein Trägersteg vorhanden ist, steht für die Ausbildung der Vertiefungen 22, 23 ein großer Raum zur Verfügung. Dadurch kann die Zylinderkopfdichtung mit den Dichtelementen 7 und dem Träger 1 genau an den jeweiligen Dichtungs- und Konstruktionsfall angepaßt werden. Das Dichtelement 17 ist vorzugsweise symmetrisch ausgebildet, kann aber auch asymmetrische Formgebung haben. So kann das Dichtelement 7 hinsichtlich seiner Formgestaltung und Formgebung der Dichtlippen 16, 17 auf der Oberseite 18 des Trägers 1 anders ausgebildet werden als an der Trägerunterseite. Ebenso können die Vertiefungen 22, 23 unterschiedlich ausgebildet sein. Die einander gegenüberliegenden Seitenflächen 11 und 12 der Trägerteile 9, 10, die den Ringspalt 13 für das Dichtelement 7 begrenzen, können je nach Dichtungs- und/oder Konstruktionsfall verschiedenartig ausgebildet sein. So können die Seitenflächen beispielsweise abgesetzt sein, einen unregelmäßigen Umriß aufweisen, zahnartig ausgebildet sein oder eine andere Profilgebung haben. Insbesondere kann das Dichtelement 7 in jeder beliebigen geometrischen Konfiguration gestaltet werden, je nach den erwünschten technischen Anforderungen. Da das Dichtelement 7 aus elatischem Werkstoff besteht, können sich die durch dieses Dichtelement verbunden Trägerteile 9, 10 relativ zueinander bewegen. Eine solche begrenzte Beweglichkeit ist bei thermischen Beanspruchungen der abzudichtenden Teile von großem Vorteil. Infolge dieser Beweglichkeit kann sich die Zylinderkopfdichtung im Bereich der Öffnungen 5, 6 spannungsfrei an die jeweiligen Dichtbedingungen anpassen. Auch Temperaturschwankungen können durch diese Relativbeweglichkeit ausgeglichen werden. Sie ist in allen Richtungen gegeben, also nicht nur quer zur Ober- bzw. Unterseite des Trägers 1, sondern auch parallel zur Trägerebene. Auch ist eine Relativbewegung in einer Neigungsebene möglich.

Die Dichtelemente 7 sind im Bereich der für die Kühlkanäle des Verbrennungsmotors vorgesehenen Öffnungen 5 und 6 angeordnet. Im Bereich der Ausnehmungen 2 für die Verbrennungsräume des Motors sind die Dichtelemente 4 vorgesehen, die wegen der hohen thermischen Beanspruchungen aus metallischem Material bestehen. Die Dichtelemente 4 werden im folgenden anhand der Fig. 4 im einzelnen erläutert. Das Dichtelement 4 wird durch eine entsprechende Profilierung des Trägers 1 selbst gebildet. Das Dichtelement 4 liegt mit geringem Abstand von dem die Ausnehmung 2 begrenzenden Rand 30. Mit Abstand von diesem Rand 30 geht der Träger 1 in einen über seine Oberseite 18 ragenden Abschnitt 31 über, der im Querschnitt gemäß Fig. 4 stumpfwinklig in den Träger 1 übergeht. Außerdem geht dieser Abschnitt 31 stumpfwinklig in einen weiteren Abschnitt 32 über, der sich bis über die Trägerunterseite 19 erstreckt und länger ist als der Abschnitt 31. Dieser Abschnitt 32 geht dann seinerseits wieder stumpfwinklig in einen Abschnitt 33 des Dichtelementes 4 über, der seinerseits wieder stumpfwinklig in den Träger 1 übergeht. Auf diese Weise hat das Dichtelement 4 im Querschnitt zwei V-förmige Teile 34 und 35, deren Spitzen 36 und 37 mit Abstand oberhalb und unterhalb der Trägeroberseite 18 und der Trägerunterseite 19 liegen.

Bei eingebauter Zylinderkopfdichtung werden die Dichtelemente 4 zwischen dem Motorblock und dem Zylinderkopf eingespannt. Hierbei werden die Dichtelemente 4 flachgedrückt, wobei die Abschnitte 31 bis 33 verformt werden. An den Spitzen 36 und 37 tritt im Einbauzustand eine Linien- oder Punktberührung zum Zylinderkopf bzw. zum Motorgehäuse auf, wodurch eine einwandfreie Abdichtung im Bereich der Ausnehmungen 2 sichergestellt ist. Die einzelnen Abschnitte 31 bis 33 des Dichtelementes 4 wirken in der Einbaulage als rückfedernde Arme, die Vertikalbewegungen des Zylinderkopfes und des Motorgehäuses durch elastische Federung folgen können, so daß diese Vertikalbewegungen keinen Einfluß auf die Dichtwirkung des Dichtelementes 4 haben. Mit der beschriebenen Ausbildung der Dichtelemente 4 wird somit ein Nachstelleffekt erreicht, der gewährleistet, daß im Betrieb auftretende Relativbewegungen zwischen dem Zylinderkopf und dem Motorgehäuse die Abdichtung im Bereich der Dichtelemente 4 nicht beeinträchtigen.

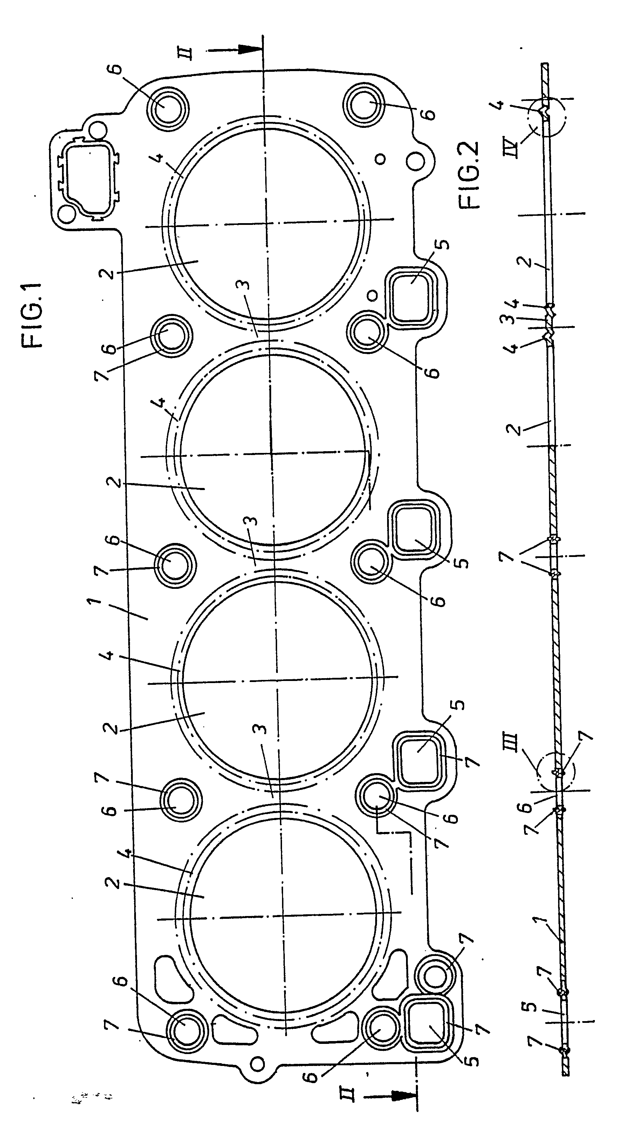

Wie Fig. 1 zeigt, erstrecken sich die Dichtelemente 4 über den Umfang der Ausnehmungen 2. Im Bereich zwischen benachbarten Ausnehmungen 2 sind die Dichtelemente 4 durch die Stege 3 miteinander verbunden.

Die Zylinderkopfdichtung läßt sich sehr kostengünstig aus einer Metallplatine herstellen. Da die Zylinderkopfdichtung, abgesehen von den Dichtelementen 7, aus dem gleichen metallischen Material besteht, ergibt sich in der Einbaulage eine gleichmäßige kontinuierliche und homogene Wärmeverteilung in der Zylinderkopfdichtung. Spannungen im Zylinderkopf und am Block sowie an bzw. in der Dichtung sind damit ausgeschlossen. Die Zylinderkopfdichtung kann definiert verformt werden, so daß eine optimale Dichtwirkung erreicht wird. Da der Träger 1 aus Metall besteht, kann der Zylinderkopf mit einem exakten Anziehmoment befestigt werden. Die Zylinderkopfdichtung kann darüber hinaus wiederverwendet werden. Da sie überwiegend aus Metall besteht, läßt sie sich zum Auswechseln mühelos vom Zylinderkopf bzw. Motorgehäuse entfernen. Es bleiben keine Teile der Zylinderkopfdichtung am Zylinderkopf oder am Motorgehäuse hängen.

Die Dichtelemente 7 liegen im weniger temperaturbeanspruchten Bereich des Trägers 1, so daß eine übermäßige Erwärmung der Dichtteile 7 ausgeschlossen ist. Der aus Metall bestehende Träger 1 gewährleistet darüber hinaus eine gute Wärmeverteilung, die ebenfalls einer übermäßigen Erwärmung der Dichtteile 7 entgegenwirkt. An den Ausnehmungen 2 und an den Öffnungen 5, 6 können mehrere Dichtelemente 4, 7 hintereinander angeordnet werden. Der Träger 1 kann anstatt aus Metall auch aus einem anderen geeigneten hitzebeständigen Material bestehen.

**Ansprüche**

1. Zylinderkopfdichtung mit einem Träger, der Ausnehmungen für Verbrennungsräume und Kühlkanäle eines Verbrennungsmotors aufweist, von denen die verbrennungsraumseitigen Ausnehmungen am Rand hitzebeständige, vorzugsweise metallische Dichtelemente aufweisen, die sich über den Umfang der Ausnehmungen erstrecken, dadurch gekennzeichnet, daß die verbrennungsraumseitigen Dichtelemente (4) durch profilierte Abschnitte (31 bis 33) des Trägers (1) gebildet sind.

2. Zylinderkopfdichtung nach Anspruch 1, dadurch gekennzeichnet, daß die Dichtelemente (4) geringen Abstand vom Rand (30) der Ausnehmungen (2) haben.

3. Zylinderkopfdichtung nach Anspruch 1 oder 2, dadurch gekennzeichnet, daß die Dichtelemente (4) jeweils aus zwei im Querschnitt V-förmigen Teilen (34, 35) gebildet sind, deren Spitzen (36, 37) im Bereich oberhalb und unterhalb des Trägers (1) liegen.

4. Zylinderkopfdichtung nach Anspruch 3, dadurch gekennzeichnet, daß die beiden Teile (34, 35) einen Schenkel (32) gemeinsam haben.

5. Zylinderkopfdichtung nach einem der Ansprüche 1 bis 4, dadurch gekennzeichnet, daß die profilierten Abschnitte (31 bis 33) im Querschnitt gerade verlaufen.

6. Zylinderkopfdichtung nach einem der Ansprüche 1 bis 5,
dadurch gekennzeichnet, daß die profilierten Abschnitte (31 bis 33) in Einbaulage der Zylinderkopfdichtung elastisch rückfedernd verformt sind.

7. Zylinderkopfdichtung nach einem der Ansprüche 1 bis 6,
dadurch gekennzeichnet, daß die kühlkanalseitigen Dichtelemente (7) einen den Rand (8) der Ausnehmungen (5, 6) für die Kühlkanäle aufweisenden Trägerabschnitt (9) mit dem übrigen Trägerteil (10) verbinden.

8. Zylinderkopfdichtung nach einem der Ansprüche 1 bis 7,
dadurch gekennzeichnet, daß die kühlkanalseitigen Dichtelemente (7) über die Ober- und Unterseite (18, 19) des Trägers (1) ragende Dichtlippen (16, 17) aufweisen.

9. Zylinderkopfdichtung nach Anspruch 8,
dadurch gekennzeichnet, daß das kühlkanalseitige Dichtelement (7) im Bereich neben den Dichtlippen (16, 17) jeweils einen Verdrängungsraum (22, 23) aufweist.

10. Zylinderkopfdichtung nach einem der Ansprüche 1 bis 9,
dadurch gekennzeichnet, daß das kühlkanalseitige Dichtelement (7) aus elastomerem Material besteht.

FIG.1

FIG.2

EP 0 330 126 A2

EP 0 330 126 A2

FIG.3

FIG.4